# EUROPÄISCHE PATENTANMELDUNG

(11) **EP 1 329 385 A1**
(43) Veröffentlichungstag der Anmeldung: **23.07.2003**
(21) Anmeldenummer: 03000360.2
(22) Anmeldetag: 10.01.2003
(51) Int. Cl.: B65B 5/10, B65G 69/16

(54) **Vorrichtung zur Ablage von Gegenständen, insbesondere von Kleinteilen, in einen Behälter**

(30) Priorität: 28.05.2002 DE 10223839; 18.01.2002 DE 10202069
(71) Anmelder: Zink, Eduard, 75334 Straubenhardt (DE)
(72) Erfinder: Zink, Eduard, 75334 Straubenhardt (DE)
(74) Vertreter: Leitner, Waldemar, Dr. techn.

(57) **Zusammenfassung**

Die Erfindung betrifft eine Vorrichtung zur Ablage von Gegenständen (G), insbesondere von Kleinteilen, in einen Behälter (B), wobei die Gegenstände (G) der Vorrichtung (1) über eine Zuführeinrichtung (Z) zuführbar sind, wobei die Vorrichtung (1) eine Ablegeeinrichtung (2; 22; 42; 62; 82; 102) mit einer Ablegeeinheit (2b; 22b; 42b; 62b; 82b; 102b) aufweist, durch welche die in den Behälter (B) abzulegenden Gegenstände (G) in das Innere des Behälters (B) bewegbar sind.

Erfindungsgemäß ist vorgesehen, daß die Ablegeeinrichtung (2; 22; 42; 62; 82; 102) eine Transporteinheit (2a; 22a; 42a; 62a; 82a; 102a) und eine Ablegeeinheit (2b; 22b; 42b; 62b; 82b; 102b) aufweist, wobei durch die Transporteinheit (2a; 22a; 42a; 62a; 82a; 102a) die in dem Behälter (B) abzulegenden Gegenstände (G) von der Zuführeinrichtung (Z) zu der Ablegeeinheit (2b; 22b; 42b; 62b; 82b; 102b) der Ablegeeinrichtung (2) transportierbar sind, und wobei durch die Ablegeeinheit (2b; 22b; 42b; 62b; 82b; 102b) die abzulegenden Gegenstände (G) in das Innere des Behälters (B) transportierbar sind, und daß die Ablegeeinrichtung (2; 22; 42; 62; 82; 102) eine Vielzahl von Aufnahmeelementen (6) aufweist, in welche die von der Zuführeinrichtung (Z) der Vorrichtung (1) zugeführten und in den Behälter (B) abzulegenden Gegenstände (G) aufnehmbar sind.

## Beschreibung

Die Erfindung betrifft eine Vorrichtung zur Ablage von Gegenständen, insbesondere von Kleinteilen, in einen Behälter, wobei die Gegenstände der Vorrichtung über eine Zuführeinrichtung zuführbar sind, wobei die Vorrichtung eine Ablegeeinrichtung mit einer Ablegeeinheit aufweist, durch welche die in den Behälter abzulegenden Gegenstände in das Innere des Behälters bewegbar sind.

Eine derartige Vorrichtung ist aus der DE 197 41 601 des Anmelders bekannt. Bei der bekannten Vorrichtung ist vorgesehen, daß die Vorrichtung einen Drehkörper aufweist, der durch eine Dreheinrichtung um seine Achse drehbar in oder über dem Behälter anordbar ist, wobei der Drehkörper an oder in seinem Umfangsbereich mindestens ein mit der Zuführleitung zusammenwirkendes Einlaufelement aufweist, durch das die im Behälter abzulegenden Gegenstände dem Drehkörper zuführbar sind. Desweiteren weist der Drehkörper der bekannten Vorrichtung in seinem unteren Bereich mindestens ein Auslaufelement auf, durch das die Gegenstände vom Drehkörper in den Behälter leitbar sind. Die Vorrichtung besitzt desweiteren eine Hubeinrichtung, durch die der Drehkörper und der Behälter relativ zueinander bewegbar sind.

Derartige Vorrichtungen dienen dazu, insbesondere bei der Massenproduktion von Kleinteilen, die produzierten Gegenstände in Aufnahme- oder Sammelbehälter zu deren Ablage und Speicherung abzulegen. Hierbei muß gewährleistet sein, daß die Fallhöhe der Gegenstände im Behälter möglichst klein ist, um deren Beschädigung zu vermeiden. Außerdem soll vorzugsweise vermieden werden, daß im Behälter eine die Austrittsstelle aus der Vorrichtung umgebende Anhäufung der Gegenstände auftritt, so daß eine gleichmäßige Verteilung der Gegenstände im Behälter erzielt wird.

Die bekannte Vorrichtung besitzt unbestreitbare Vorteile bei Gegenständen, die leicht in die Führungselemente des Drehkörpers einbringbar sind und dann durch die Drehung des Drehkörpers in das Führungselement zum Auslaufelement der bekannten Vorrichtung leitbar sind. Eine Ablage von "sperrigeren" Gegenständen, also von Gegenständen, die durch die Führungselemente des Drehkörpers nicht einfach weiterbewegbar sind, ist aber mit der bekannten Vorrichtung nur schwierig durchzuführen.

Es ist daher Aufgabe der Erfindung, eine Vorrichtung der eingangs genannten Art derart weiterzubilden, daß mit der erfindungsgemäßen Vorrichtung eine Fallhöhenreduzierung bei der Ablage auch und insbesondere von "sperrigeren" Gegenständen gegeben ist.

Die Aufgabe wird erfindungsgemäß dadurch gelöst, daß die Ablegeeinrichtung eine Transporteinheit und eine Ablegeeinheit aufweist, wobei durch die Transporteinheit die in dem Behälter abzulegenden Gegenstände von der Zuführeinrichtung zu der Ablegeeinheit der Ablegeeinrichtung transportierbar sind, und wobei durch die Ablegeeinheit die abzulegenden Gegenstände in das Innere des Behälters transportierbar sind, und daß die Ablegeeinrichtung eine Vielzahl von Aufnahmeelementen aufweist, in welche die von der Zuführeinrichtung der Vorrichtung zugeführten und in den Behälter abzulegenden Gegenstände aufnehmbar sind.

Vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Figuren beschrieben werden. Es zeigen:
- Figur 1: eine schematische Darstellung eines ersten Ausführungsbeispiels einer Vorrichtung zur Ablage von Gegenständen in einen Behälter,
- Figur 2: eine Seitenansicht des ersten Ausführungsbeispiels,
- Figur 3: ein zweites Ausführungsbeispiel einer derartigen Vorrichtung,
- Figur 4: ein drittes Ausführungsbeispiel einer derartigen Vorrichtung,
- Figur 5: ein viertes Ausführungsbeispiel einer derartigen Vorrichtung,
- Figur 6: eine Seitenansicht eines fünften Ausführungsbeispiels einer derartigen Vorrichtung,
- Figur 7: eine Draufsicht auf das fünfte Ausführungsbeispiel,
- Figur 8: eine Seitenansicht des fünften Ausführungsbeispiels,
- Figur 9: eine Seitenansicht eines sechsten Ausführungsbeispiels,
- Figur 10: eine Draufsicht auf das sechste Ausführungsbeispiel, und
- Figur 11: eine Seitenansicht des sechsten Ausführungsbeispiels.

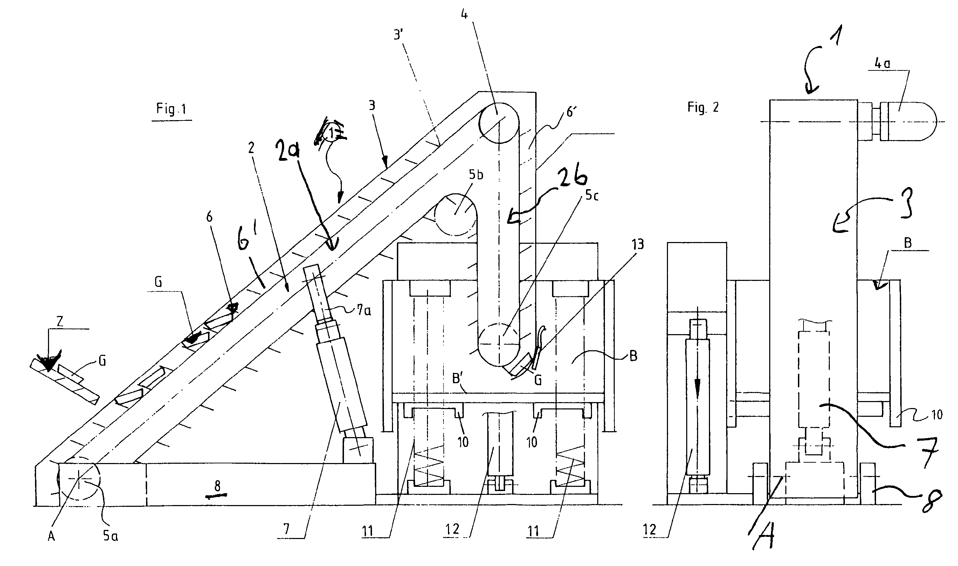

In den Figuren 1 und 2 ist nun ein erstes Ausführungsbeispiel einer Vorrichtung zur Ablage von Gegenständen G in einen Behälter B dargestellt. Die allgemein mit 1 bezeichnete Vorrichtung weist eine Ablegeeinrichtung 2 mit einer umlaufenden Transporteinrichtung 3 auf, die im hier beschriebenen Fall als ein Förderband 3' ausgebildet ist, welches über eine von einem Antrieb 4a angetriebene Antriebsrolle 4 und drei Umlenkrollen 5a-5c geführt ist.

Das Förderband 3' weist eine Vielzahl von - hier als Aufnahmefächer 6' ausgebildeten - Aufnahmeelementen 6 auf, in welchen die von einer Zuführeinrichtung Z der Vorrichtung 1 zugeführten und in den Behältern B abzulegenden Gegenstände G aufnehmbar sind. Die Antriebsrolle 4 sowie die Umlenkrollen 5a-5c sind dabei derart angeordnet, daß das Förderband 3' der Ablegeeinrichtung 2 in seinem über dem Behälter B befindlichen Bereich im wesentlichen senkrecht verläuft und eine Ablegeeinheit 2b der Ablegeeinrichtung 2 ausgebildet, so daß durch diese Ablegeeinheit 2b der Ablegeeinrichtung 2 die in den Aufnahmefächern 6' aufgenommenen Gegenstände G in Richtung des Behälterinneren des Behälters B transportiert werden und an dem durch die Umlenkrolle 5c definierten Umkehrpunkt der Ablegeeinheit 2b der Ablegeeinrichtung 2 aus den Aufnahmeelementen 6 der Ablegeeinrichtung 2 in den Behälter B fallen. Im hier gezeigten Fall ist die Ablegeeinheit 2b der Ablegeeinrichtung 2 im wesentlichen senkrecht verlaufend angeordnet, wobei es aber auch möglich ist, daß durch eine entsprechende Anordnung der Umlenkrolle 5c die Ablegeeinheit 2b schräg verlaufend angeordnet ist.

Der zwischen der ersten Umlenkrolle 5a und der Antriebsrolle 4 verlaufende Bereich des Förderbands 3' bildet hierbei eine Transporteinheit 2a der Ablegeeinrichtung 2 aus, welche dazu dient, die in den Behälter B abzulegenden Gegenstände von der Zuführeinrichtung Z zu der Ablegeeinheit 2b der Ablegeeinrichtung 2 zu transportieren.

Die funktionale Baugruppen der Ablegeeinrichtung 2 darstellende Transporteinheit 2a und die Ablegeeinheit 2b sind beim gezeigten ersten Ausführungsbeispiel als integrale Bestandteile der Ablegeeinrichtung 2 ausgeführt, so daß es möglich ist, zur Realisierung der Ablegeeinheit 2b und der Transporteinheit 2a ein und dieselbe Transporteinheit 3, also ein und dasselbe Förderband 3' zu verwenden. Eine derartige Maßnahme besitzt den Vorteil eines besonders einfachen mechanischen Aufbaus.

Um nun die Fallhöhe der von der Ablegeeinrichtung 2 in den Behälter B abzulegenden Gegenstände an unterschiedliche Einsatzzwecke, die z. B. durch unterschiedlich große Gegenstände G bedingt sind, anpassen zu können, ist vorgesehen, daß die Vorrichtung 1 ein Stellglied 7 aufweist, das auf einer Plattform 8 der Vorrichtung 1 angeordnet ist und mit seinem Stellelement 7a an der Ablegeeinrichtung 2 angreift, so daß durch eine entsprechende Stellbewegung des Stellelements 7a des Stellglieds 7 die Ablegeeinrichtung 2, die über eine Achse A der ersten Umlenkrolle 5a in der Plattform 8 der Vorrichtung 1 schwenkbar angeordnet ist, um diese Achse A zu verschwenken, wodurch der Abstand der dritten Umlenkrolle 5c vom Boden B' des Behälters B und somit die Fallhöhe der Gegenstände G veränderbar ist.

Der Behälter B ist - wie am besten aus Figur 1 ersichtlich ist - auf zwei von einem Hubelement 12 beaufschlagten Tragarmen 10 gelagert, und von Federn 11 unterstützt. Die den Behälter B beaufschlagende Gesamtkraft wird dabei derart eingestellt, daß sich der Behälter B bei zunehmender Beladung mit den Gegenständen G langsam absenkt, so daß für die Gegenstände G im wesentlichen die gleiche Fallhöhe zwischen dem Umkehrpunkt der Ablegeeinrichtung 2 und der oberen Lage der im Behälter B befindlichen Gegenstände G erreicht wird.

Vorzugsweise ist hierzu ein Füllhöhensensor 13 der Vorrichtung 1 vorgesehen, der die Füllhöhe der Gegenstände G im Behälter B erfaßt und das Hubelement 12 dementsprechend ansteuert.

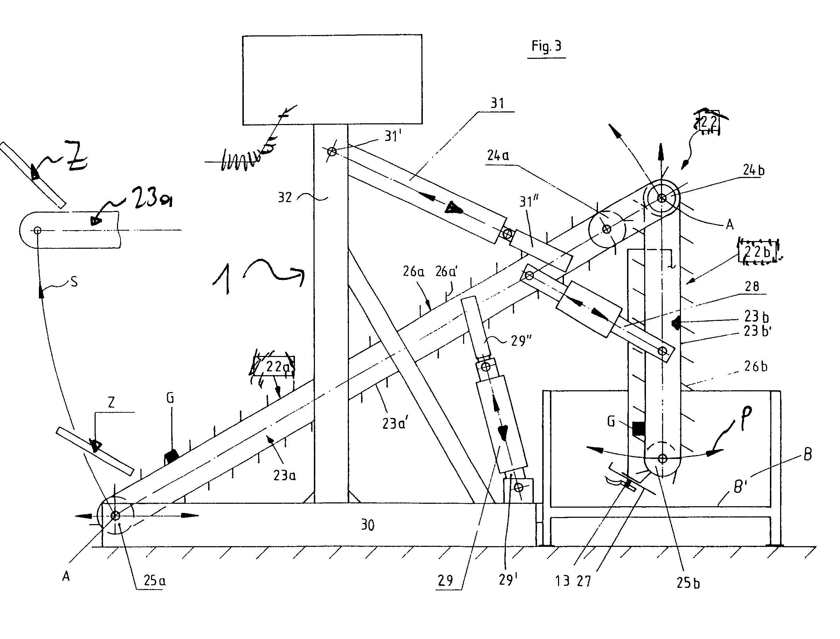

In der Figur 3 ist ein zweites Ausführungsbeispiel einer Vorrichtung 1 zur Ablage von Gegenständen G in einem Behälter B dargestellt, welches sich von dem in den Figuren 1 und 2 dargestellten ersten Ausführungsbeispiel dadurch unterscheidet, daß eine Ablegeeinrichtung 22 des zweiten Ausführungsbeispiels nun durch zwei getrennte Einheiten 22a und 22b ausgebildet ist, nämlich durch die die im Behälter B abzulegenden Gegenstände G von der Zuführeinrichtung Z aufnehmende Transporteinheit 22a und die die Gegenstände G im Behälter B ablegende Ablegeeinheit 22b. Die Transporteinheit 22a weist als Transporteinrichtung 23a ein Förderband 23a' mit als Aufnahmefächer 26a' ausgebildeten Aufnahmeelementen 26a auf, welches über eine Antriebsrolle 24a, die von einem in der Figur 3 nicht gezeigten Antrieb angetrieben ist, und eine Umlenkrolle 25a geführt ist.

Die Ablegeeinheit 22b weist als Transporteinrichtung 23b ein Förderband 23b' mit Aufnahmeelementen 26b auf, welches über eine Antriebsrolle 24b und eine Umlenkrolle 25b geführt ist, welche den Umkehrpunkt der Ablegeeinheit 22b definiert.

Ein jeder der von der Zuführeinrichtung Z zugeführten Gegenstände G wird zuerst in einem Aufnahmeelement 26a der Transporteinheit 22a der Ablegeeinheit 22 aufgenommen und vom Förderband 23a' der Transporteinheit 22a bis zu der einen Umkehrpunkt der Transporteinheit 22a definierenden Antriebsrolle 24a transportiert.

Dann gleitet der Gegenstand G aus dem ihn aufnehmenden Aufnahmeelement 26a in ein entsprechendes Aufnahmeelement 26b der synchron laufenden Ablegeeinheit 22b und wird von dieser durch eine entsprechende Bewegung des Förderbands 23b, welche im hier gezeigten Fall bei der Ablegeeinheit 22b entgegen dem Uhrzeigersinn erfolgt, bis zu der den Umkehrpunkt der Ablegeeinheit 22b definierenden Umlenkrolle 25b transportiert. An diesem Ablagepunkt der Ablegeeinheit 22b gleitet dann der Gegenstand G aus dem Aufnahmeelement 26b heraus und in den Behälter B.

Hierbei kann vorgesehen sein, daß unter der Ablegeeinheit 22b noch ein Ablageschieber 27 angeordnet ist, der den aus dem Aufnahmeelement 26 gleitenden Gegenstand G auffängt und ihn dann in den Behälter B rutschen läßt. Ein derartiger Ablageschieber 27 besitzt den Vorteil, daß hierdurch eine weitere Reduzierung der Fallhöhe des Gegenstands G erzielbar ist.

Um nun nicht nur - wie beim ersten Ausführungsbeispiel - eine Punktablage von Gegenständen G im zu befüllenden Behälter B zu ermöglichen, ist beim beschriebenen Ausführungsbeispiel vorzugsweise vorgesehen, daß die Ablegeeinheit 22b - wie durch den Doppelpfeil P angedeutet - aus ihrer in der Figur 3 gezeigten Mittellage auslenkbar ist. Diese Verschwenkbewegung der Ablegeeinheit 22b um eine Achse A der Antriebsrolle 24b wird vorzugsweise durch ein Stellglied 28 bewirkt, welches die Ablegeeinheit 22b und die Transporteinheit 22a verbindet.

Um nun die Fallhöhe der Ablegeeinheit 22b relativ zum Behälter B verändern zu können, ist bei der beschriebenen Vorrichtung 1 vorzugsweise ein zweites Stellglied 29 vorgesehen ist, welches an der mit der Ablegeeinheit 22b verbundenen Transporteinheit 22a angreift, so daß diese um die Achse A ihrer Umlenkrolle 25a verschwenkbar ist. Im hier gezeigten Fall ist ein erstes Ende 29' des weiteren Stellglieds 29 an einer stationären Plattform 30 der Vorrichtung 1 und ein zweites Ende 29" des weiteren Stellglieds 29 an der Transporteinheit 22a angelenkt.

Es ist aber auch möglich, alternativ zum weiteren Stellglied 29 - oder auch ergänzend hierzu - ein weiteres Stellglied 31 vorzusehen, dessen erste Ende 31' nun nicht an der Plattform 30, sondern an einem Träger 32 und dessen zweites Ende 31" wiederum an der Transporteinheit 22a angreift.

Wie in Figur 3 ebenfalls angedeutet, ist es nicht erforderlich, daß die Transporteinheit 22a schräg nach oben verlaufend angeordnet ist. Vielmehr ist es möglich, wie durch den Pfeil S angedeutet, die Transporteinheit 22a in (fast) jedem beliebigen Winkel zur Ablegeeinheit 22b anzuordnen.

Wie aus Figur 3 ebenfalls ersichtlich ist, weist die in Figur 3 dargestellte Vorrichtung 1 wiederum einen Füllstandshöhensensor 13 auf, mit dem die Füllhöhe der Gegenstände G im Behälter B überwachbar ist.

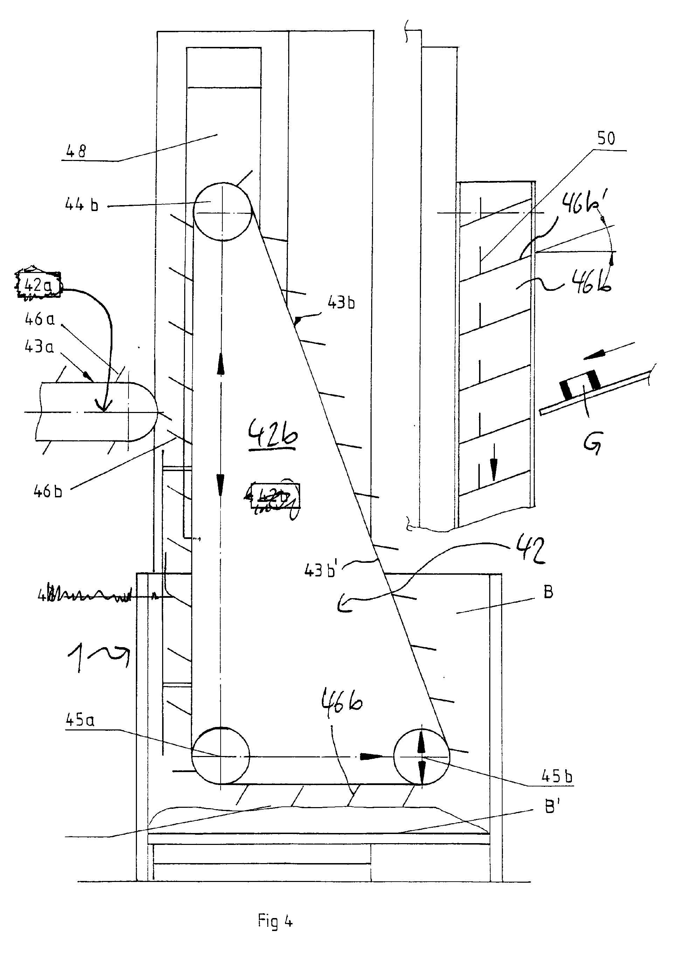

In Figur 4 ist nun ein drittes Ausführungsbeispiel einer Vorrichtung 1 zur Ablage von Gegenständen G in einen Behälter B dargestellt, welches sich von dem in Figur 3 gezeigten zweiten Ausführungsbeispiel dadurch unterscheidet, daß die Vorrichtung 1 eine der Ablegeeinheit 22b der Ablegeeinrichtung 22 entsprechende Ablegeeinheit 42b einer Ablegeeinrichtung 42 aufweist, bei der im Unterschied zu der Ablegeeinheit 22b ein als Transporteinrichtung 43b fungierendes Förderband 43b' nicht nur über eine Antriebsrolle und eine Umlenkrolle, sondern über eine Antriebsrolle 44b sowie über zwei Umlenkrollen 45a, 45b geführt ist. Die Ablegeeinheit 42b besitzt somit einen dreieckigen Verlauf des Förderbands 43b, wobei - im hier gezeigten Ausführungsbeispiel - eine Kathete dieses Förderband-Dreiecks im wesentlichen senkrecht angeordnet und die zweite Kathete im wesentlichen parallel zum Boden B' des Behälters B angeordnet ist.

Die in den Behälter B abzulegenden Gegenstände werden dann von der in Figur 4 nur schematisch dargestellten Transporteinheit 42a der Ablegeeinheit 42b zugeführt, fallen in Aufnahmeelemente 46a eines als Transporteinrichtung 43a der Transporteinheit 42a fungierenden Förderbands 43b' und fallen dann vom vorderen Ende der Transporteinheit 42a in entsprechende Aufnahmeelemente 46b der Ablegeeinheit 42b.

Es ist aber auch möglich, daß die Gegenstände G der Ablegeeinheit 42b von der Hypothenusen-Seite des Förderband-Dreiecks zugeführt werden. Ebenso ist es möglich, das Förderband-Dreieck als ein gleichschenkeliges Dreieck auszubilden.

Selbstverständlich ist es auch möglich, mehr als zwei Umlenkrollen 45a, 45b vorzusehen, um damit einen polygonen Verlauf der Ablegeeinheit 42b auszubilden.

Die Anordnung einer Seite des Förderband-Dreiecks im wesentlichen parallel oder leicht geneigt zum Boden B' des Behälters B besitzt den Vorteil, daß hierdurch durch die vorzugsweise schaufelartig oder lappenartig ausgebildeten Aufnahmeelemente 46b eine Verteilung der abzulegenden Gegenstände G über den Boden B' des Behälters B erzielbar ist.

Wie aus der rechten, oberen Seitenansicht der Vorrichtung 1 der Figur 4 leicht zu entnehmen ist, wird bei dem dritten Ausführungsbeispiel der Vorrichtung 1 bevorzugt, daß die als Aufnahmefächer ausgebildeten Aufnahmeelemente 46b einen schräg verlaufenden Boden 46b' aufweisen, so daß die den Aufnahmeelementen 46b zugeführten Gegenstände bis zu einem - vorzugsweise verschiebbaren - Stapelelement 50 rutschen.

Die Ablegeeinheit 42b ist in einer Trägerstruktur 48 höhenverstellbar angeordnet, so daß die Fallhöhe der Gegenstände G der im Beladevorgang des Behälters B zunehmenden Füllhöhe des Behälters B mit den Gegenständen G nachgeführt werden kann.

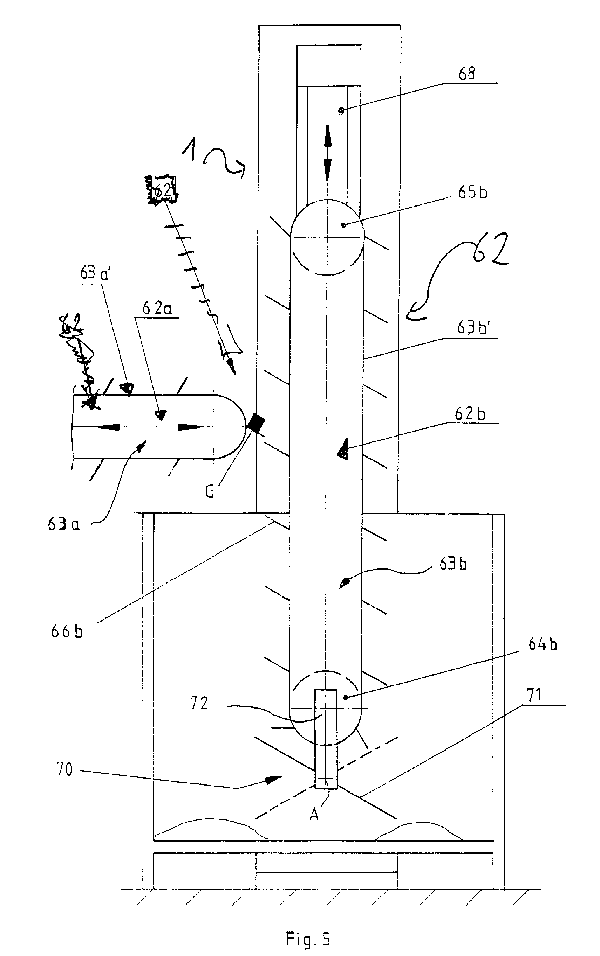

In Figur 5 ist nun schematisch ein viertes Ausführungsbeispiel einer Vorrichtung 1 zur Ablage von Gegenständen G in einem Behälter B dargestellt, welche wiederum eine Ablegeeinrichtung 62 mit einer Transporteinheit 62a und einer Ablegeeinheit 62b aufweist. Die Ablegeeinheit 62b weist ein Aufnahmeelemente 66b aufweisendes, als Transporteinrichtung 63b fungierendes Förderband 63b' auf, welches über eine Antriebsrolle 65b und eine Umlenkrolle 64b geführt ist, wobei die Ablegeeinheit 62b wiederum höhenverstellbar angeordnet ist, indem die beiden vorgenannten Rollen 64b, 65b in einer Trägerstruktur 68 verschiebbar angeordnet sind.

Die Vorrichtung 1 des vierten Ausführungsbeispiels weist an ihrem unteren Ende eine Ablageweiche 70 auf, die es ermöglicht, von einem als Transporteinrichtung 63a fungierenden Förderband 63a' der Transporteinheit 62a zugeführte Gegenstände G wahlweise im linken und im rechten Bereich des Behälters B abzulegen. Im hier gezeigten Fall ist die Ablageweiche 70 als eine schwenkbar angeordnete Rutsche 71 ausgebildet, die um eine Achse A drehbar in einem mit der Ablegeeinheit 62b verbundenen Halteelement 72 gelagert ist. Befindet sich nun die Rutsche 71 der Ablageweiche 70 in der in Figur 5 durchgezogen gezeigten Stellung, so wird ein vom Förderband 63a der Transporteinheit 62a zur Ablegeeinheit 62b transportierter und von dieser zur Ablageweiche 70 beförderter Gegenstand auf den in Figur 5 rechten Ablagehaufen abgelegt. Wird nun die Rutsche 71 der Ablageweiche 70 in ihre in Figur 5 strichliert gezeigte Stellung bewegt, so wird dieser Gegenstand G auf den in Figur 5 linken Ablagehaufen abgelegt.

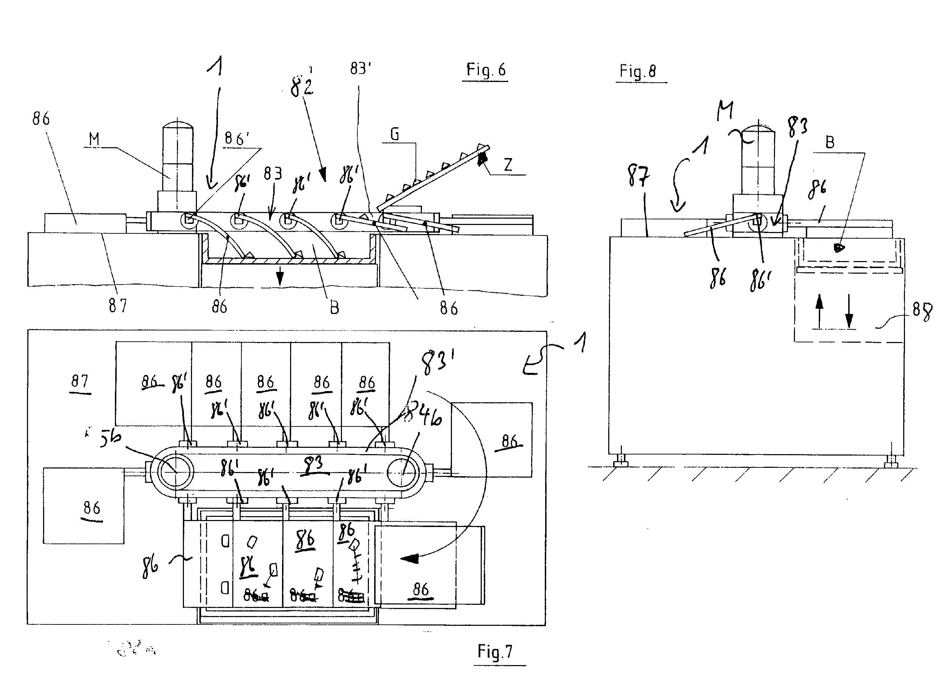

In den Figuren 6-8 ist nun ein fünftes Ausführungsbeispiel einer Vorrichtung 1 zur Ablage von Gegenständen G in einen Behälter B dargestellt. Eine Ablegeeinrichtung 82 weist als Transporteinrichtung 83 ein rundumlaufendes Förderband 83' auf, an dem eine Vielzahl von - vorzugsweise lappenartig - ausgebildeten Aufnahmeelementen 86 beweglich gegenüber der Transporteinrichtung 83 angeordnet sind. Infolge der Umlaufbewegung des über eine Antriebsrolle 85b und eine Umlenkrolle 84a geführten, von einem Motor M angetriebenen Förderbands 83' der Ablegeeinrichtung 82 werden die Aufnahmeelemente 86 über eine Tischfläche 87 der Vorrichtung 1 gezogen, die eine Ausnehmung 88 aufweist, in der der Behälter B einsetzbar ist. Über der Ablegeeinrichtung 82 ist eine Zuführeinrichtung Z angeordnet, auf der die von der Ablegeeinrichtung 82 im Behälter B abzulegenden Gegenstände G angeordnet sind. Wie aus Figur 6 ersichtlich ist, gleiten die abzulegenden Gegenstände G am Ende der Zuführeinrichtung Z auf eines der Aufnahmeelemente 86, welches - wie ebenfalls aus Figur 6 ersichtlich ist - hier noch von der Tischfläche 87 der Vorrichtung 1 waagrecht oder leicht schräg geführt wird. Wird nun das den Gegenstand G aufnehmende Aufnahmeelement 86 von dem - im hier gezeigten Fall im Uhrzeigersinn umlaufenden - Förderband 83' weiterbewegt, so gleitet das seinem Anlenkpunkt 86' am Förderband 83' gegenüberliegende Ende des Aufnahmeelements 86 in den Behälter B, was in einer Zunahme der Schrägstellung des Aufnahmeelements 86 resultiert. Es bildet daher eine Art Rutsche für den Gegenstand G aus, wodurch der in dem Behälter B abzulegende Gegenstand G vom Aufnahmeelement 86 in den Behälter B gleitet. Nachdem das entsprechende Aufnahmeelement 86 am Ende des Behälters B angekommen ist, setzt es an der Tischfläche 87 an, wodurch es wieder in eine leicht schräg gestellte oder zur Tischfläche 87 parallele Lage gebracht wird, so daß es einfach weiterbewegt werden kann und schließlich wiederum beim nächsten Umlauf unter die Zuführeinrichtung Z gebracht wird.

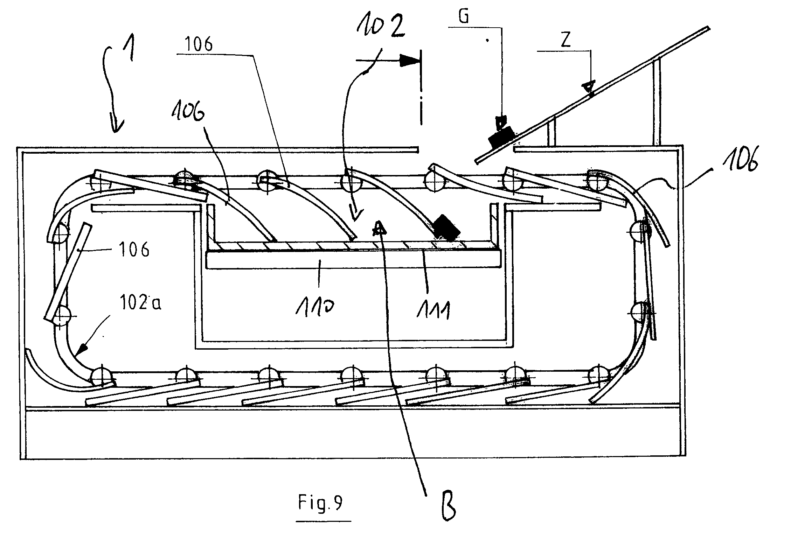

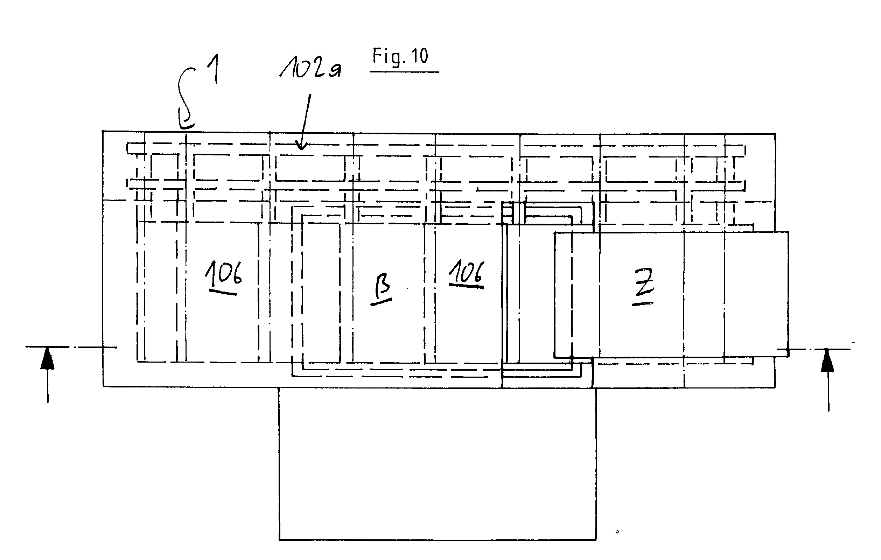

In den Figuren 9-11 ist nun ein sechstes Ausführungsbeispiel einer Vorrichtung 1 zur Ablage von Gegenständen G in einen Behälter B dargestellt, welches seiner Funktionsweise nach dem in den Figuren 6-8 dargestellten vierten Ausführungsbeispiel entspricht. Der sofort ins Auge fallende Unterschied zwischen den beiden Ausführungsbeispielen besteht nun darin, daß eine der Transporteinheit 82a für die Aufnahmeelemente 86 entsprechende Transporteinheit 102a einer Ablegeeinrichtung 102 für entsprechende Aufnahmeelemente 106 nun nicht horizontal, sondern vertikal umläuft. Ein von einer Zuführeinrichtung Z rutschender Gegenstand G gelangt dann wiederum auf eines der lappenartig ausgebildeten, gegenüber der Transporteinrichtung 102a beweglichen Aufnahmeelemente 106, und rutscht dann, wenn sich dieses Aufnahmeelement 106 im Inneren des Behälters B befindet, vom Aufnahmeelement 106 in den Behälter B.

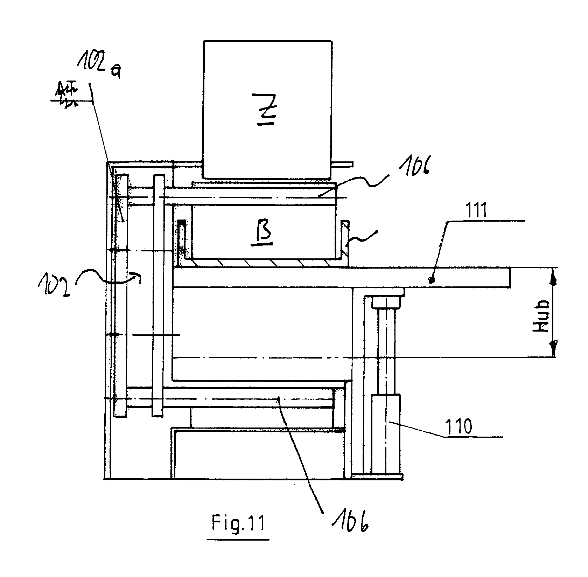

Wie am besten aus Figur 11 ersichtlich ist, weist die Vorrichtung 1 des sechsten Ausführungsbeispiels, ebenso wie die Vorrichtung 1 des fünften Ausführungsbeispiels (bei dieser nicht gezeigt), eine durch ein Hubelement 110 höhenverstellbare Tragfläche 111 für den Behälter B auf.

## Patentansprüche

1. Vorrichtung zur Ablage von Gegenständen (G), insbesondere von Kleinteilen, in einen Behälter (B), wobei die Gegenstände (G) der Vorrichtung (1) über eine Zuführeinrichtung (Z) zuführbar sind, wobei die Vorrichtung (1) eine Ablegeeinrichtung (2; 22; 42; 62; 82; 102) mit einer Ablegeeinheit (2b; 22b; 42b; 62b; 82b; 102b) aufweist, durch welche die in den Behälter (B) abzulegenden Gegenstände (G) in das Innere des Behälters (B) bewegbar sind, **dadurch gekennzeichnet, daß** die Ablegeeinrichtung (2; 22; 42; 62; 82; 102) eine Transporteinheit (2a; 22a; 42a; 62a; 82a; 102a) und eine Ablegeeinheit (2b; 22b; 42b; 62b; 82b; 102b) aufweist, wobei durch die Transporteinheit (2a; 22a; 42a; 62a; 82a; 102a) die in dem Behälter (B) abzulegenden Gegenstände (G) von der Zuführeinrichtung (Z) zu der Ablegeeinheit (2b; 22b; 42b; 62b; 82b; 102b) der Ablegeeinrichtung (2) transportierbar sind, und wobei durch die Ablegeeinheit (2b; 22b; 42b; 62b; 82b; 102b) die abzulegenden Gegenstände (G) in das Innere des Behälters (B) transportierbar sind, und daß die Ablegeeinrichtung (2; 22; 42; 62; 82; 102) eine Vielzahl von Aufnahmeelementen (6) aufweist, in welche die von der Zuführeinrichtung (Z) der Vorrichtung (1) zugeführten und in den Behälter (B) abzulegenden Gegenstände (G) aufnehmbar sind.

2. Vorrichtung nach einem der vorangehenden Ansprüche, **dadurch gekennzeichnet, daß** die Transporteinheit (2a) und die Ablegeeinheit (2b) der Ablegeeinrichtung (2) als integrale Bestandteile der Ablegeeinrichtung (2) ausgebildet sind.

3. Vorrichtung nach einem der Ansprüche 1 oder 2, **dadurch gekennzeichnet, daß** die Transporteinheit (22a; 42a; 62a) und die Ablegeeinheit (22b; 42b; 62b) als voneinander separierte Bestandteile der Ablegeeinrichtung (22; 42; 62) ausgebildet sind.

4. Vorrichtung nach einem der vorangehenden Ansprüche, **dadurch gekennzeichnet, daß** die Ablegeeinrichtung (2) eine umlaufende Transporteinrichtung (3) aufweist.

5. Vorrichtung nach Anspruch 4, **dadurch gekennzeichnet, daß** die Transporteinrichtung (3) als ein Förderband (3') ausgebildet ist, welches über eine von einem Antrieb (4a) angetriebene Antriebsrolle (4) und drei Umlenkrollen (5a-5c) geführt ist.

6. Vorrichtung nach einem der vorangehenden Ansprüche, **dadurch gekennzeichnet, daß** das Förderband (3') der Ablegeeinrichtung (2) in seinem über dem Behälter (B) befindlichen Bereich im wesentlichen senkrecht oder schräg verläuft, so daß die in den Aufnahmeelementen (6) der Ablegeeinheit (2b) der Ablegeeinrichtung (2) aufgenommenen Gegenstände (G) in Richtung des Behälterinneren des Behälters (B) transportierbar sind und an einem Umkehrpunkt der Ablegeeinheit (2b) der Ablegeeinrichtung (2) aus den Aufnahmeelementen (6) der Ablegeeinrichtung (2) in den Behälter (B) fallen.

7. Vorrichtung nach einem der vorangehenden Ansprüche, **dadurch gekennzeichnet, daß** die Vorrichtung (1) ein Stellglied (7) aufweist, welches mit seinem Stellelement (7a) an der Ablegeeinrichtung (2) angreift, so daß durch eine entsprechende Verstellbewegung des Stellelements (7a) des Stellglieds (7) die Ablegeeinrichtung (2) um eine Achse (A) verschwenkbar ist.

8. Vorrichtung nach einem der vorangehenden Ansprüche, **dadurch gekennzeichnet, daß** der Behälter (B) auf mindestens einem von einem Hubelement (12) beaufschlagten Tragarm (10) gelagert und von Federn (11) unterstützt ist.

9. Vorrichtung nach einem der vorangehenden Ansprüche, **dadurch gekennzeichnet, daß** die Vorrichtung (1) einen Füllhöhensensor (13) aufweist, mittels dessen die Füllhöhe der Gegenstände (G) im Behälter (B) erfaßbar ist.

10. Vorrichtung nach einem der vorangehenden Ansprüche, **dadurch gekennzeichnet, daß** unter der Ablegeeinheit (22b) ein Ablageschieber (27) angeordnet ist, der die aus dem Aufnahmebehälter (26b) gleitenden Gegenstände (G) auffängt.

11. Vorrichtung nach einem der vorangehenden Ansprüche, **dadurch gekennzeichnet, daß** die Ablegeeinheit (22b) verschwenkbar angeordnet ist und/oder in ihrer Höhe über dem Behälter (B) verstellbar ist.

12. Vorrichtung nach einem der vorangehenden Ansprüche, **dadurch gekennzeichnet, daß** die Ablegeeinheit (42b) eine Antriebsrolle (44b) sowie zwei Umlenkrollen (25a, 25b) aufweist, wobei eine Kathete dieses Dreiecks im wesentlichen parallel zum Boden (B') des Behälters (B) angeordnet ist.

13. Vorrichtung nach einem der vorangehenden Ansprüche, **dadurch gekennzeichnet, daß** die Ablegeeinheit (42b) schaufelartig oder lappenartig ausgebildete Aufnahmeelemente (46b) aufweist.

14. Vorrichtung nach einem der vorangehenden Ansprüche, **dadurch gekennzeichnet, daß** mindestens ein Aufnahmeelement (46b) der Ablegeeinrichtung (42b) einen schräg verlaufenden Boden (46b') aufweist, so daß die diesem Aufnahmeelement (46b) zugeführten Gegenstände (G) bis zu einem vorzugsweise verschiebbaren Stapelelement (50) rutschbar sind.

15. Vorrichtung nach einem der vorangehenden Ansprüche, **dadurch gekennzeichnet, daß** die Vorrichtung (1) eine Ablageweiche (70) aufweist.

16. Vorrichtung nach Anspruch 15, **dadurch gekennzeichnet, daß** die Ablageweiche (70) eine schwenkbar angeordnete Rutsche (71) aufweist, die um eine Achse (A) drehbar in einem mit der Ablegeeinheit (72) verbundenen Halteelement (72) gelagert ist.

17. Vorrichtung nach einem der vorangehenden Ansprüche, **dadurch gekennzeichnet, daß** die Vorrichtung (1) eine Tischfläche (87) aufweist, über die die Aufnahmeelemente (86) der Transporteinrichtung (83) bewegbar sind.
